(19) **Europäisches Patentamt / European Patent Office / Office européen des brevets**

(11) **EP 4 223 608 A1**

(12) # EUROPEAN PATENT APPLICATION

(43) Date of publication:
**09.08.2023 Bulletin 2023/32**

(21) Application number: **22305130.1**

(22) Date of filing: **07.02.2022**

(51) International Patent Classification (IPC):
**B60W 40/13** (2012.01)     **B60W 40/10** (2012.01)
**B60W 50/00** (2006.01)

(52) Cooperative Patent Classification (CPC):
**B60W 40/13; B60W 40/1005; B60W 50/0097;**
B60W 2520/10; B60W 2520/105; B60W 2552/15;
B60W 2710/0666

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TOYOTA JIDOSHA KABUSHIKI KAISHA**
**Toyota-shi, Aichi-ken, 471-8571 (JP)**

(72) Inventors:
• **BOUILLY, Julien**
**1140 BRUSSELS (BE)**

• **MARTIN, Thierry**
**1140 BRUSSELS (BE)**
• **CLARET-TOURNIER, Julien**
**1140 BRUSSELS (BE)**
• **STUCKY, Matthieu**
**1140 BRUSSELS (BE)**
• **TAKEUCHI, Kazuo**
**TOYOTA-SHI, AICHI-KEN, 471-8571 (JP)**

(74) Representative: **Cabinet Beau de Loménie**
**158, rue de l'Université**
**75340 Paris Cedex 07 (FR)**

Remarks:
Amended claims in accordance with Rule 137(2) EPC.

(54) **DUAL EKF METHOD FOR ESTIMATING MASS AND ROAD LOAD COEFFICIENTS OF A VEHICLE**

(57)    The present invention concerns a method for estimating a mass and road load coefficients of a vehicle (1), including first and second rolling resistance coefficients and an air resistance coefficient, wherein estimates of the road load coefficients with values calculated on the basis of estimated road load forces ($F_{rld}$) calculated using a first Extended Kalman Filter, and the estimate of the mass is updated with an average of values calculated using a second Extended Kalman Filter.

**FIG. 1**

EP 4 223 608 A1

**Description**

TECHNICAL FIELD

The disclosure relates to the field of vehicles, and in particular to the estimation of mass and road load coefficients of a vehicle. Said road load coefficients comprise first and second rolling coefficients in a first order polynomial equation for calculating a rolling resistance as a function of the speed of the vehicle, and an air resistance coefficient for calculating air resistance as a product of the air resistance coefficient with the square of the speed of the vehicle.

BACKGROUND

Estimating the mass and road load coefficients of a vehicle can be useful, for instance, for predicting energy consumption and/or range which, because of the limited energy density of batteries, the still-limited availability of charging stations and hydrogen refuelling stations, and the comparatively long charging times of batteries, can be particularly important for electric vehicles, including battery electric vehicles, fuel cell electric vehicles, plug-in hybrid electric vehicles and other hybrid electric vehicles. However, in real-life conditions both the mass and each of the road load coefficients can fluctuate very significantly. Vehicle mass will increase with the passenger and/or cargo load, while the rolling resistance coefficients may vary widely depending also on the vehicle load, as well as the state of the tires and the road, the weather and other factors. Similarly, the air resistance coefficient may vary depending on various factors, including the weather, whether windows are open or any outer elements degrade the aerodynamics of the vehicle. Consequently, relying on nominal mass and road load coefficients of the vehicle can result in significant errors when predicting energy consumption and/or range.

For this reason, it has already been proposed, for instance in US Patent No. 10,507,820 and International Patent Application Publication No. WO 2013/075280 A1, to estimate the mass and/or road load coefficient based on current driving data. However, it is difficult to disentangle the contribution of mass and road load to the response of the vehicle without a large dataset to draw upon. This leads to a longer waiting time at the beginning of a trip before having sufficient data for inferring reliable estimates of vehicle mass and road load coefficients for predicting energy consumption and/or range along a given route.

SUMMARY

A first object of the disclosure is thus that of providing a faster method for estimating a mass and road load coefficients of a vehicle, wherein the road load coefficients include first and second rolling resistance coefficients and an air resistance coefficient for calculating a road load force of the vehicle for the given speed by adding the first rolling resistance coefficient to a product of the second rolling resistance coefficient and the given speed and to a product of the air resistance coefficient and a square of the given speed.

According to a first aspect of the disclosure the method may comprise the steps of attributing predetermined initial values to estimates of the mass and the road load coefficients, obtaining a corresponding speed, acceleration, torque and inclination for each time step of a plurality of time steps, calculating an estimated road load force for each time step of the plurality of time steps, updating the estimates of the road load coefficients, and updating the estimate of the mass. A first Extended Kalman Filter applying the corresponding speed, acceleration, torque and inclination and the estimate of the mass may be used for calculating the estimated road load force for each time step. The estimates of the road load coefficients may be updated with values calculated on the basis of the estimated road load forces and corresponding speeds for a first selected set of time steps of the plurality of time steps, and the estimate of the mass may be updated with an average of values calculated using a second Extended Kalman Filter applying the estimates of the road load coefficients and the corresponding speeds, accelerations, torques and inclinations for a second selected set of time steps of the plurality of time steps. By using separate first and second Extended Kalman Filters and data from separate first and second selected sets of time steps for updating the estimates of, respectively, the road load forces and the mass, it is possible to disentangle the influence of the mass and the road load to reliably estimate the mass and road load coefficients using data from a comparatively small plurality of time steps, and therefore more quickly.

The first selected set of time steps may be selected using a first set of criteria. In particular, the first set of criteria may include that an absolute value of a force ratio is below a first predetermined force ratio threshold for each time step of the first selected set of time steps. The force ratio may result from dividing, by the estimated road load force, the estimate of the mass, multiplied by a sum of the corresponding acceleration and a product of gravity and a sine of an angle of the corresponding inclination. Consequently, the first set of criteria can exclude the time steps in which the road load force was not predominant within the driving force, so that the estimates of the road load coefficients may be updated with values calculated for a first selected set of time steps in which the road load force predominated, values which will thus more accurately reflect the impact of the road load on the driving force.

On the other hand, the second selected set of time steps may be selected using a second set of criteria. In particular, the second set of criteria may include that an absolute value of said force ratio be above a second predetermined force ratio threshold for each time step of the second selected set of time steps. Consequently, the second set of criteria can exclude the time steps in which the road load force was predominant within the driving force, so that the estimate for the mass may be updated with an average of values calculated for time steps in which inertia and gravity predominated, values which will thus more accurately reflect the impact of the mass on the driving force.

Moreover, in order to exclude the time steps at which the vehicle circulates at low speed, which could result in a high variance of the road load force estimates, the first set of criteria may include that the corresponding speed for each time step of the first selected set of time step be above a first speed threshold. Since low speeds could also result in a high variance of the mass estimates, the second set of criteria may analogously include that the corresponding speed for each time step of the second selected set of time steps is above a second speed threshold.

Since the road load force may be expressed as a second-order polynomial function of speed, the values with which the road load coefficients are updated may be calculated by second order polynomial regression. In order to facilitate this second-order polynomial regression, each corresponding speed for the first selected set of time steps may be replaced with a closest value in a predetermined discrete set of speed values, before averaging the estimated road load forces to obtain an average estimated road load force for each speed value of the predetermined set of speed values, and performing the second order polynomial regression on the predetermined set of speed values and their average estimated road load forces

The average with which the estimate of the mass may be updated may be calculated for instance as the median of the $20^{th}$ to the $80^{th}$ percentiles of the values calculated using the second Extended Kalman Filter.

In order to improve the accuracy of the estimates of the mass and the road load coefficients, the steps after obtaining corresponding speed, torque and inclination values may be iterated multiple times. Before each iteration, corresponding speeds, accelerations, torques and inclinations for one or more additional time steps may be obtained, and the one or more additional time steps added to the plurality of time steps.

The corresponding speed and acceleration for each time step of the plurality of time steps may in particular be obtained from at least one wheel speed sensor, such as e.g. an ABS sensor. The corresponding torque for each time step of the plurality of time steps may in particular be obtained from at least one control unit, and in particular from an electronic control unit of a prime mover of the vehicle, such as for instance an electric motor. The corresponding inclination for each time step of the plurality of time steps may in particular be obtained from a navigation system, and in particular a satellite navigation system using e.g. GPS, GLONASS, Galileo, and/or BeiDou signals for localisation, with a map including local elevation and/or inclination data.

Second, third and fourth aspects of the disclosure respectively relate to a data processing system comprising one or more processors adapted to perform the method of the first aspect; to a computer program comprising instructions which, when the program is executed by a computer, cause the computer to carry out the method of the first aspect; and to a computer-readable medium comprising instructions which, when executed by a computer, cause the computer to carry out the method of the first aspect.

A fifth aspect of the disclosure relates to a method for estimating driving work of a vehicle over a predicted route including a sequence of predicted positions and associated predicted speeds, accelerations and inclinations. The method according to this fifth aspect may comprise the steps of: estimating a mass and road load coefficients of the vehicle according to the method of the first aspect; calculating a driving force for each predicted position as the sum of the road load force calculated, for the associated predicted speed, using the estimates of the road load coefficients, and the estimate of the mass, multiplied by a sum of an absolute value of the associated predicted acceleration and a product of gravity and a sine of an angle of the associated predicted inclination; and integrating the driving force over the sequence of predicted positions in the predicted route to obtain an estimate of the driving work. This method may comprise a further step of comparing the estimate of the driving work to an energy reserve of the vehicle, comprising electric energy stored in a battery assembly and/or fuel stored in a fuel tank.

Sixth, seventh and eighth aspects of the disclosure respectively relate to a data processing system comprising one or more processors adapted to perform the method of the fifth aspect; to a computer program comprising instructions which, when the program is executed by a computer, cause the computer to carry out the method of the fifth aspect; and to a computer-readable medium comprising instructions which, when executed by a computer, cause the computer to carry out the method of the fifth aspect.

The above summary of some example embodiments is not intended to describe each disclosed embodiment or every implementation of the invention. In particular, selected features of any illustrative embodiment within this specification may be incorporated into an additional embodiment unless clearly stated to the contrary.

BRIEF DESCRIPTION OF THE DRAWINGS

The invention may be more completely understood in consideration of the following detailed description of various embodiments in connection with the accompanying drawings, in which :

- FIG. 1 is a schematic representation of a vehicle on an inclined road;

- FIG. 2 is a flowchart of a method for estimating mass and road load coefficients of the vehicle of FIG. 1; and
- FIGS. 3A to 3C illustrate steps of binning, averaging and performing a second order polynomic regression on a dataset comprising associated speed and estimated road load force values.

While the invention is amenable to various modifications and alternative forms, specifics thereof have been shown by way of example in the drawings and will be described in detail. It should be understood, however, that the intention is not to limit aspects of the invention to the particular embodiments described. On the contrary, the intention is to cover all modifications, equivalents, and alternatives falling within the scope of the invention.

DETAILED DESCRIPTION

For the following defined terms, these definitions shall be applied, unless a different definition is given in the claims or elsewhere in this specification.

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.

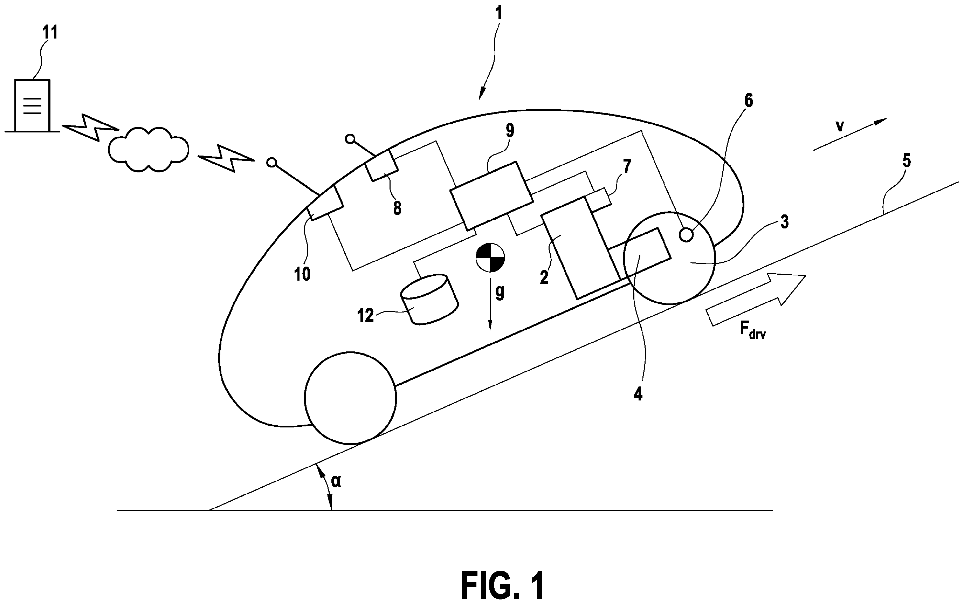

A vehicle, and in particular a wheeled road vehicle 1 as illustrated on Fig. 1 may be driven by a prime mover 2 over one or more driven wheels 3. For this, the prime mover 2, which may comprise an electric motor and/or an internal combustion engine, and may be drivingly coupled to the driven wheels 3 over a transmission 4, may transmit a torque $T_{wheel}$ to the driven wheels 3. Over the contact surface of the driven wheels 3 to the road 5, this torque $T_{wheel}$ is converted into a driving force $F_{drv}$, according to the following equation:

$$F_{drv} = T_{wheel} \times R_{dyn}$$

wherein $R_{dyn}$ represents the radius of the driven wheels 3.

The driving force $F_{drv}$ may overcome a road load force $F_{rld}$ and a road inclination and accelerate the vehicle 1, according to the following equation:

$$F_{drv} = F_{rld} + m_{tot} \times (\dot{v} + g \times sin\alpha)$$

wherein $m_{tot}$ represents the total mass of the vehicle 1, potentially including any towed mass such as e.g. a trailer or caravan, $\dot{v}$ represents the acceleration of the vehicle 1, g represents gravity, and $\alpha$ the angle of inclination of the road 5. The inclination of the road 5 may also be expressed as a grade, that is, as a ratio of elevation to distance. The relation of this grade to the inclination angle $\alpha$ can be expressed with the equation :

$$\alpha = atan\left(\frac{Grade_\%}{100}\right)$$

wherein $Grade_\%$ represents said grade in percentage form.

The road load force $F_{rld}$ may follow a second grade polynomial function of the speed $\dot{v}$ of the vehicle 1, according to the following equation:

$$F_{rld} = A_{roll} + B_{roll} \times v + C_{drag} \times v^2$$

wherein $A_{roll}$ and $B_{roll}$ respectively represent a first and a second rolling resistance coefficients, and $C_{drag}$ an air resistance coefficient.

Consequently, knowing the road load coefficients $A_{roll}$, $B_{roll}$ and $C_{drag}$ of the vehicle 1, it is possible to calculate the road load force $F_{rld}$ for any given speed v of the vehicle 1, and knowing the road load force $F_{rld}$ and the mass $m_{tot}$, it is possible to calculate the total driving force $F_{drv}$ by adding the road load force $F_{rld}$ to the mass $m_{tot}$ multiplied by a sum of the acceleration $\dot{v}$ and the product of multiplying gravity g by the sine of the inclination angle $\alpha$.

The driving work $W_{drv}$, that is, the energy used by the vehicle 1 to drive over a route from a position A to a position B, may be obtained by integrating the driving force $F_{drv}$ of the vehicle 1 over the whole distance of the route between positions A and B:

$$W_{drv} = \int_A^B F_{drv}$$

Consequently, knowing the mass $m_{tot}$ and road load coefficients $A_{roll}$, $B_{roll}$ and $C_{drag}$ of the vehicle 1, it will be possible to calculate the energy that it will consume with a given speed profile over a route with a known elevation profile. However, the actual total mass $m_{tot}$ and road load coefficients $A_{roll}$, $B_{roll}$ and $C_{drag}$ of a vehicle 1 may substantially differ from its nominal specifications, depending on such factors as passenger and cargo load, tire and road conditions, weather, etc.

To obtain more accurate estimates of the actual

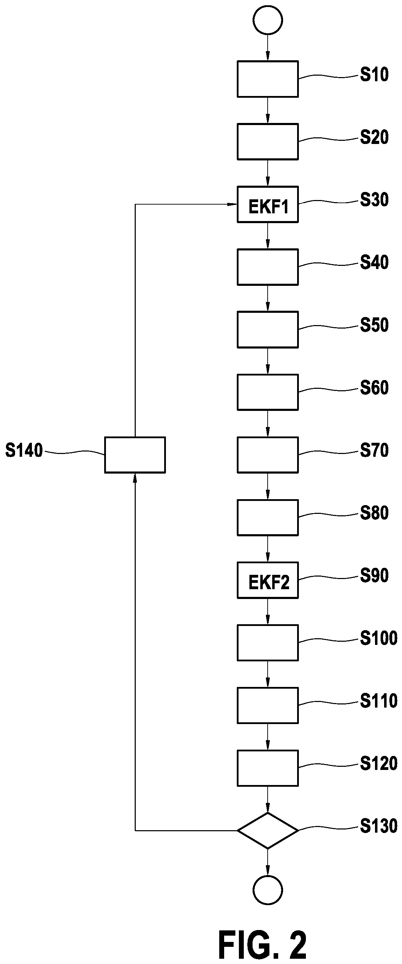

mass $m_{tot}$ and road load coefficients $A_{roll}$, $B_{roll}$ and $C_{drag}$ of the vehicle 1, and thus of the driving force $F_{drv}$ and driving work $W_{drv}$, a method may be carried out as illustrated in the flow chart of Fig. 2. In a first step S10, predetermined initial values may be attributed to estimates of the mass $m_{tot}$ and the road load coefficients $A_{roll}$, $B_{roll}$ and $C_{drag}$ of the vehicle 1. These initial values may correspond, for example, to previously stored nominal specifications of the vehicle 1. In a next step S20 of this method, a corresponding speed v, acceleration $\dot{v}$, torque $T_{wheel}$ and inclination angle $\alpha$ may be obtained for each time step of a plurality of time steps. The corresponding speeds $\dot{v}$ and accelerations $\dot{v}$ may be obtained, for instance, from one or more wheel sensors 6, such as e.g. ABS sensors. The corresponding torques $T_{wheel}$ may be obtained, for instance, from an electronic control unit 7 of the prime mover 2. The corresponding inclination angles $\alpha$ may be obtained from a navigation system 8, and in particular from a satellite navigation system using e.g. GPS, GLONASS, Galileo, and/or BeiDou signals for localisation, with a map including local elevation and/or inclination data.

All these data may be received by an onboard data processing system 9, which may be connected to the wheel sensors 6, electronic control unit 7, and/or navigation system 8, for local processing. Alternatively or additionally, they may be received by a wireless transceiver 10, such as e.g. a cellular network transceiver, which may be connected to the wheel sensors 6, electronic control unit 7, navigation system 8, and/or onboard data processing system 9, and transmitted wirelessly for remote processing at a remote data processing system 11. For offline processing, they may also be stored in a data storage medium 12, which may be also connected to the wheel sensors 6, electronic control unit 7, navigation system 8, and/or onboard data processing system 9.

In the next step S30, a first Extended Kalman Filter may be used to calculate an estimate of the road load force $F_{rld}$, for each time step of the plurality of time steps, on the basis of the corresponding speed v, acceleration $\dot{v}$, torque $T_{wheel}$ and inclination angle $\alpha$ for that time step, and the estimate of the mass $m_{tot}$ of the vehicle 1. In the following step S40, a first selected set of time steps may be selected using a first set of criteria using the estimates of the mass $m_{tot}$ and road load force $F_{rld}$. This first set of criteria may include two criteria:

$$\left| \frac{m_{tot} \times (\dot{v} + g \times sin\alpha)}{F_{rld}} \right| < K_1$$
$$v > V_1$$

wherein $K_1$ represents a first predetermined force ratio threshold, with a value of e.g. 0.8, and $V_1$ a first predetermined speed threshold, with a value of e.g. 10 km/h. In this step S40 the time steps may thus be selected in which, according to the estimates, the road load force

$F_{rld}$ predominates and the speed exceeds a minimum threshold.

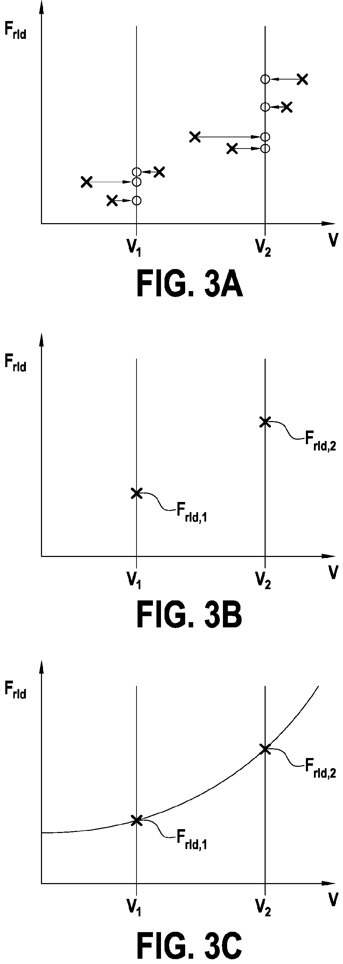

In the next step S50, a discrete binning by speed $v$ of the estimates of the road load force $F_{rld}$ for the first selected set of time steps is performed, so that each corresponding speed for the first selected set of time steps is replaced with a closest value in a predetermined discrete set of n speed values $v_1, v_2,..., v_n$, as shown in Fig. 3A. Then, in step S60, the estimates of the road load force $F_{rld}$ for each value of the predetermined discrete set of n speed values $v_1, v_2,..., v_n$ may be averaged to obtain an average (for example, a mean) estimated road load force $F_{rld,1}, F_{rld,2},..., F_{rld,n}$ for each value of the predetermined discrete set of n speed values $v_1, v_2..., v_n$, as shown in Fig. 3B. In step S70, a second order polynomial regression may be applied on the average estimated road load forces $F_{rld,1}, F_{rld,2},..., F_{rld,n}$ and corresponding speed values $v_1, v_2..., v_n$ to extract a second order polynomial function, as shown in Fig. 3C. In step S80, the estimates of the road load coefficients $A_{roll}$, $B_{roll}$ and $C_{drag}$ may then be updated with the values of the coefficients of that extracted second order polynomial function.

In the next step S90, a second Extended Kalman Filter may be used to calculate a value for the mass $m_{tot}$, for each time step of the plurality of time steps, on the basis of the corresponding speed v, acceleration $\dot{v}$, torque $T_{wheel}$ and inclination angle $\alpha$ for that time step. In step S100, a second selected set of time steps may be selected using a second set of criteria using the estimates for the mass $m_{tot}$ and the road load force $F_{rld}$. This second set of criteria may include two criteria:

$$\left| \frac{m_{tot} \times (\dot{v} + g \times sin\alpha)}{F_{rld}} \right| > K_2$$
$$v > V_2$$

wherein $K_2$ represents a second predetermined force ratio threshold, with a value of e.g. 2.0, and $V_2$ a second predetermined speed threshold, with a value of e.g. 10 km/h. In this step S100 the time steps may thus be selected in which, according to the estimates, the road load force $F_{rld}$ does not predominate, and the speed $v$ exceeds a minimum threshold.

In step S110, the calculated values for the mass $m_{tot}$ may be averaged, for instance by calculating the median of these values between the 20th to the 80th percentiles. In step S120, the previous estimate of the mass $m_{tot}$ may then be updated with the average from step S110.

In step S130, it may be checked whether a predetermined number of iterations has been carried out. If the predetermined number of iterations has been reached, the process may end, but if it has not been reached, the process may loop back to step S30, to perform a further iteration of the estimation using the first and second Extended Kalman Filters. Before each new iteration, in step S140, corresponding speeds $v$, accelerations $\dot{v}$, torques $T_{wheel}$ and inclination angles $\alpha$ for one or more additional time steps may be obtained, and the one or more additional time steps added to the plurality of time steps. More accurate estimates of the mass $m_{tot}$ and road load coefficients $A_{roll}$, $B_{roll}$ and $C_{drag}$ of the vehicle 1 may thus result. Eventually, if this processing has been carried out remotely, these resulting estimates may be transmitted back to the vehicle 1 over the onboard transceiver 10 for further use.

The estimates of the mass $m_{tot}$ and road load coefficients $A_{roll}$, $B_{roll}$ and $C_{drag}$ of the vehicle 1 may be used in several different manners. For instance, if the estimate of the mass $m_{tot}$ exceeds a predetermined threshold above a nominal value, the driver may be warned that the vehicle 1 is overloaded. Similarly, if the estimate aerodynamic resistance coefficient $C_{drag}$ exceeds a predetermined threshold above a nominal value, the driver may be warned of a high aerodynamic drag (which may be caused by the presence of a roof box, bike rack, trailer, or any apparatus affixed to the vehicle 1) and warn the driver.

Another application of the estimates of the mass $m_{tot}$ and road load coefficients $A_{roll}$, $B_{roll}$ and $C_{drag}$ of the vehicle 1 may be for estimating in turn a driving work $W_{drv}$ of the vehicle 1 over a predicted route including a sequence of predicted positions and associated predicted speeds, accelerations and inclinations, wherein the accelerations may be derived from a predicted speed profile, and the inclinations from a predicted elevation profile.

For estimating the driving work $W_{drv}$ of the vehicle 1 over the predicted route, after having obtained the estimates of the mass $m_{tot}$ and road load coefficients $A_{roll}$, $B_{roll}$ and $C_{drag}$ of the vehicle 1, the driving force $F_{drv}$ may be calculated for each predicted position as the sum of the road load force $F_{rld}$ and the product of the estimate of the mass $m_{tot}$ with a sum of an absolute value of the predicted acceleration $\dot{v}$ at the predicted position and a product of gravity and a sine of the angle $\alpha$ of the predicted inclination at the predicted position. The road load force $F_{rld}$ may be calculated, for the predicted speed $v$ at the predicted position, using the corresponding second grade polynomial equation with the estimates of the road load coefficients coefficients $A_{roll}$, $B_{roll}$ and $C_{drag}$. The driving force may then be integrated over the sequence of predicted positions in the predicted route to obtain an estimate of the driving work $W_{drv}$.

In order to estimate the range of the vehicle 1 over the predicted route, and eventually warn the driver of an insufficient range to complete the predicted route, the estimate of the driving work $W_{drv}$ may be compared with an energy reserve of the vehicle 1. In particular, for a battery electric vehicle, this energy reserve may correspond to the electric energy stored in the batteries, that is, to the state of charge of those batteries. If the state of charge is insufficient to reliably complete the predicted route, the driver may thus be warned and/or directed towards a charging station at or near the predicted route. Analogously, in a fuel cell electric vehicle or in an internal combustion engine vehicle, the energy reserve may correspond to the chemical energy of the fuel stored in a fuel tank. If the fuel is insufficient to reliably complete the predicted route, the driver may also be warned and/or directed towards a refuelling station at or near the predicted route.

Estimating the driving work $W_{drv}$ over a predicted route may also be used to select the most energy-efficient route among multiple alternatives, to calculate fuel consumption and/or greenhouse gas emissions at individual or fleet levels, and/or to optimize a hybrid powertrain energy management strategy for a hybrid electric vehicle.

Those skilled in the art will recognize that the present invention may be manifested in a variety of forms other than the specific embodiments described and contemplated herein. Accordingly, departure in form and detail may be made without departing from the scope of the present invention as described in the appended claims.

## Claims

1. A method for estimating a mass and road load coefficients of a vehicle (1), wherein the road load coefficients include first and second rolling resistance coefficients and an air resistance coefficient for calculating a road load force $(F_{rld})$ of the vehicle (1) for a given speed (v) by adding the first rolling resistance coefficient to a product of the second rolling resistance coefficient and the given speed (v) and to a product of the air resistance coefficient and a square of the given speed (v), the method comprising the steps of:

> attributing (S10) predetermined initial values to estimates of the mass and the road load coefficients;
> obtaining (S20) a corresponding speed, acceleration, torque and inclination for each time step of a plurality of time steps;
> calculating (S30) an estimated road load force $(F_{rld})$ for each time step of the plurality of time steps, using a first Extended Kalman Filter applying the corresponding speed, acceleration, torque and inclination and the estimate of the mass;
> updating (S80) the estimates of the road load coefficients with values calculated on the basis of the estimated road load forces $(F_{rld})$ and corresponding speeds for a first selected set of time steps of the plurality of time steps; and
> updating (S120) the estimate of the mass with an average of values calculated using a second Extended Kalman Filter applying the estimates of the road load coefficients and the corresponding speeds, accelerations, torques and inclinations for a second selected set of time steps of the plurality of time steps.

2. The method of claim 1, wherein the first selected set of time steps is selected (S40) using a first set of criteria.

3. The method of claim 2, wherein the first set of criteria includes that an absolute value of a force ratio is below a first predetermined force ratio threshold for each time step of the first selected set of time steps, wherein the force ratio results from dividing, by the estimated road load force $(F_{rld})$, the estimate of the mass, multiplied by a sum of the corresponding acceleration and a product of gravity and a sine of an angle of the corresponding inclination.

4. The method of any one of claims 2 or 3, wherein the first set of criteria includes that the corresponding speed for each time step of the first selected set of time steps is above a first speed threshold.

5. The method of any one of claims 1 to 4, wherein the second selected set of time steps is selected (S100) using a second set of criteria.

6. The method of claim 5, wherein the second set of criteria includes that the absolute value of a force ratio resulting from dividing, by the estimated road load force $(F_{rld})$, the estimate of the mass, multiplied by a sum of the corresponding acceleration and a product of gravity and a sine of an angle of the corresponding inclination, is above a second predetermined force ratio threshold for each time step of the second selected set of time steps.

7. The method of any one of claims 5 or 6, wherein the second set of criteria includes that the corresponding speed for each time step of the second selected set of time steps is above a second speed threshold.

8. The method of any one of claims 1 to 7, wherein the values with which the road load coefficients are updated are calculated by second order polynomial regression.

9. The method of claim 8, wherein each corresponding speed for the first selected set of time steps is replaced (S50) with a closest value in a predetermined discrete set of speed values $(v_1, v_2..., v_n)$, before averaging (S60) the estimated road load forces $(F_{rld})$ to obtain a corresponding average estimated road load force $(F_{rld,1}, F_{rld,2},..., F_{rld,n})$ for each speed value of the predetermined set of speed values $(v_1, v_2..., v_n)$, and performing (S70) the second order polynomial regression on the predetermined set of speed values $(v_1, v_2..., v_n)$ and their corresponding average estimated road load forces $(F_{rld,1}, F_{rld,2},..., F_{rld,n})$.

10. The method of any one of claims 1 to 9, wherein the steps after obtaining (S20) the corresponding speed, acceleration, torque and inclinations are iterated multiple times.

11. A method for estimating driving work of a vehicle over a predicted route including a sequence of predicted positions and associated predicted speeds, accelerations and inclinations for each predicted position, comprising the steps of:

estimating a mass and road load coefficients of the vehicle according to the method of any one of claims 1 to 10,
calculating a driving force for each predicted position as the sum of the road load force $(F_{rld})$ calculated, for the associated predicted speed (v), using the estimates of the road load coefficients, and the estimate of the mass, multiplied by a sum of
the associated predicted acceleration and a product of gravity and a sine of an angle of the associated predicted inclination, and
integrating the driving force over the sequence of predicted positions in the predicted route to obtain an estimate of the driving work.

12. The method of claim 11, comprising a further step of comparing the estimate of the driving work to an energy reserve of the vehicle, comprising electric energy stored in a battery assembly and/or fuel stored in a fuel tank.

13. A data processing system (9,11) comprising one or more processors adapted to perform the method of any one of claims 1 to 10.

14. A computer program comprising instructions which, when the program is executed by a computer, cause the computer to carry out the method of any one of claims 1 to 10.

15. A computer-readable medium comprising instructions which, when executed by a computer, cause the computer to carry out the method of any one of claims 1 to 10.

**Amended claims in accordance with Rule 137(2) EPC.**

1. A method for estimating a mass and road load coefficients of a vehicle (1), wherein the road load coefficients include a first rolling resistance coefficient and an air resistance coefficient, the method comprising the steps of:

obtaining (S20) a corresponding speed, acceleration, torque and inclination for each time step of a plurality of time steps; and

calculating (S30) an estimated road load force ($F_{rld}$) for each time step of the plurality of time steps, using a first Extended Kalman Filter applying the corresponding speed, acceleration, torque and inclination and the estimate of the mass;

the method being **characterized in that** the road load coefficients further include a second rolling resistance coefficient for calculating a road load force ($F_{rld}$) of the vehicle (1) for a given speed ($v$) by adding the first rolling resistance coefficient to a product of the second rolling resistance coefficient and the given speed ($v$) and to a product of the air resistance coefficient and a square of the given speed ($v$), and by further comprising the steps of:

attributing (S10) predetermined initial values to estimates of the mass and the road load coefficients;

updating (S80) the estimates of the road load coefficients with values calculated on the basis of the estimated road load forces ($F_{rld}$) and corresponding speeds for a first selected set of time steps of the plurality of time steps; and

updating (S120) the estimate of the mass with an average of values calculated using a second Extended Kalman Filter applying the estimates of the road load coefficients and the corresponding speeds, accelerations, torques and inclinations for a second selected set of time steps of the plurality of time steps.

2. The method of claim 1, wherein the first selected set of time steps is selected (S40) using a first set of criteria.

3. The method of claim 2, wherein the first set of criteria includes that an absolute value of a force ratio is below a first predetermined force ratio threshold for each time step of the first selected set of time steps, wherein the force ratio results from dividing, by the estimated road load force ($F_{rld}$), the estimate of the mass, multiplied by a sum of the corresponding acceleration and a product of gravity and a sine of an angle of the corresponding inclination.

4. The method of any one of claims 2 or 3, wherein the first set of criteria includes that the corresponding speed for each time step of the first selected set of time steps is above a first speed threshold.

5. The method of any one of claims 1 to 4, wherein the second selected set of time steps is selected (S100) using a second set of criteria.

6. The method of claim 5, wherein the second set of criteria includes that the absolute value of a force ratio resulting from dividing, by the estimated road load force ($F_{rld}$), the estimate of the mass, multiplied by a sum of the corresponding acceleration and a product of gravity and a sine of an angle of the corresponding inclination, is above a second predetermined force ratio threshold for each time step of the second selected set of time steps.

7. The method of any one of claims 5 or 6, wherein the second set of criteria includes that the corresponding speed for each time step of the second selected set of time steps is above a second speed threshold.

8. The method of any one of claims 1 to 7, wherein the values with which the road load coefficients are updated are calculated by second order polynomial regression.

9. The method of claim 8, wherein each corresponding speed for the first selected set of time steps is replaced (S50) with a closest value in a predetermined discrete set of speed values ($v_1$, $v_2$..., $v_n$), before averaging (S60) the estimated road load forces ($F_{rld}$) to obtain a corresponding average estimated road load force ($F_{rld,1}$, $F_{rld,2}$,..., $F_{rld,n}$) for each speed value of the predetermined set of speed values ($v_1$, $v_2$..., $v_n$), and performing (S70) the second order polynomial regression on the predetermined set of speed values ($v_1$, $v_2$..., $v_n$) and their corresponding average estimated road load forces ($F_{rld,1}$, $F_{rld,2}$,..., $F_{rld,n}$).

10. The method of any one of claims 1 to 9, wherein the steps after obtaining (S20) the corresponding speed, acceleration, torque and inclinations are iterated multiple times.

11. A method for estimating driving work of a vehicle over a predicted route including a sequence of predicted positions and associated predicted speeds, accelerations and inclinations for each predicted position, comprising the steps of:

estimating a mass and road load coefficients of the vehicle according to the method of any one of claims 1 to 10,

calculating a driving force for each predicted position as the sum of the road load force ($F_{rld}$) calculated, for the associated predicted speed (v), using the estimates of the road load coefficients, and the estimate of the mass, multiplied by a sum of

the associated predicted acceleration and a product of gravity and a sine of an angle of the associated predicted inclination, and

integrating the driving force over the sequence of predicted positions in the predicted route to obtain an estimate of the driving work.

12. The method of claim 11, comprising a further step of comparing the estimate of the driving work to an energy reserve of the vehicle, comprising electric energy stored in a battery assembly and/or fuel stored in a fuel tank.

13. A data processing system (9,11) comprising one or more processors adapted to perform the method of any one of claims 1 to 10.

14. A computer program comprising instructions which, when the program is executed by a computer, cause the computer to carry out the method of any one of claims 1 to 10.

15. A computer-readable medium comprising instructions which, when executed by a computer, cause the computer to carry out the method of any one of claims 1 to 10.

**FIG. 1**

EP 4 223 608 A1

FIG. 2

FIG. 3A

FIG. 3B

FIG. 3C

Europäisches
Patentamt

European
Patent Office

Office européen
des brevets

# EUROPEAN SEARCH REPORT

Application Number

EP 22 30 5130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2014/149044 A1 (INT TRUCK INTELLECTUAL PROP CO [US]) 25 September 2014 (2014-09-25) * paragraphs [0050], [0052], [0130], [0170]; figure 14 * * the whole document * | 1-15 | INV. B60W40/13 B60W40/10 B60W50/00 |
| A | Strömungslehre Fachgebiet ET AL: "Technische Universität Darmstadt Fachbereich Maschinenbau Road Load Determination in a Wind Tunnel", , 1 January 2020 (2020-01-01), XP055941112, Retrieved from the Internet: URL:https://tuprints.ulb.tu-darmstadt.de/19370/1/Dissertation_Vogeler_final.pdf [retrieved on 2022-07-12] * page 6 * * the whole document * | 1-15 | |
| A | US 2019/039595 A1 (HAWLEY THOMAS S [US] ET AL) 7 February 2019 (2019-02-07) * the whole document * | 1-15 | TECHNICAL FIELDS SEARCHED (IPC) B60W |

The present search report has been drawn up for all claims

| Place of search | Date of completion of the search | Examiner |
|---|---|---|
| Munich | 18 July 2022 | Stolle, Martin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 22 30 5130

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2022

| Patent document cited in search report | Publication date | Patent family member(s) | Publication date |
|---|---|---|---|
| WO 2014149044 A1 | 25-09-2014 | NONE | |
| US 2019039595 A1 | 07-02-2019 | NONE | |

EPO FORM P0459

For more details about this annex : see Official Journal of the European Patent Office, No. 12/82

**EP 4 223 608 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10507820 B
- WO 2013075280 A1